# FASCICULE DE BREVET EUROPEEN

(11) **EP 3 160 710 B1**
(45) Date de publication et mention de la délivrance du brevet: **16.10.2019**
(21) Numéro de dépôt: 15732597.8
(22) Date de dépôt: 23.06.2015
(51) Int. Cl.: B29C 48/154, B29C 48/86, B29C 48/285, B29C 48/92, B29C 48/34, B29D 30/38, B29B 15/12

(54) **PROCÉDÉ ET DISPOSITIF DE FABRICATION DE FIL MÉTALLIQUE ENROBÉ DE CAOUTCHOUC**
VERFAHREN UND VORRICHTUNG ZUR HERSTELLUNG VON GUMMIBESCHICHTETEM METALLDRAHT
METHOD AND DEVICE FOR PRODUCING RUBBER-COATED METAL WIRE

(30) Priorité: 30.06.2014 FR 1456187
(43) Date de publication de la demande: 03.05.2017
(73) Titulaire: Compagnie Générale des Etablissements Michelin, 63000 Clermont-Ferrand (FR)
(72) Inventeur: TAILLEUR, Julien, F-63040 Clermont-Ferrand Cedex 9 (FR); MONNEREAU, Patrice, F-63040 Clermont-Ferrand Cedex 9 (FR); VERNIER, Davy, F-63040 Clermont-Ferrand Cedex 9 (FR)
(74) Mandataire: Noel, Luminita
(86) Numéro de dépôt international: PCT/EP2015/064109
(87) Numéro de publication internationale: WO 2016/001013

(56) Documents cités:
- WO-A1-2011/131664
- WO-A2-02/20898
- DE-A1-102011 118 719
- JP-A- 2001 121 597
- JP-A- 2006 027 068
- US-A- 2 105 812
- US-A- 3 635 621
- US-A1- 2003 152 658

## Description

L'invention concerne le domaine de la fabrication des fils métalliques destinés à la réalisation de renforts de pneumatiques. De manière générale, ces fils servent à fabriquer des nappes de renfort constituées de tronçons de fils enrobés dans un mélange de caoutchouc, parallèles entre eux, et faisant un angle donné avec la direction longitudinale de la nappe.

Ces fils peuvent être des fils unitaires ou des assemblages de fils obtenus par retordage de fils unitaires métalliques.

De manière à améliorer leur résistance, certains de ces fils, du type des fils formés par assemblage, ont la particularité de présenter une âme enrobée dans du caoutchouc. Ces fils sont gommés pendant leur fabrication par du caoutchouc à l'état non réticulé afin d'améliorer leur résistance à la corrosion et par conséquent leur endurance notamment dans les armatures de carcasses de pneumatiques pour véhicules industriels.

De manière connue, ces fils gommés sont soumis à des contraintes importantes lors du roulage des pneumatiques, notamment à des flexions ou variations de courbure répétées induisant des frottements au niveau des fils conduisant à l'usure ou la fatigue des fils. De ce fait, il est très important que ces fils soient imprégnés autant que possible par du caoutchouc et que le caoutchouc pénètre aussi bien dans les espaces entre les fils lorsque plusieurs de ces fils sont assemblés pour constituer des câbles.

Typiquement, les fils sont enrobés d'un mélange de caoutchouc en provenance d'une extrudeuse dont la sortie débouche dans une tête de gainage comportant une filière de gainage à l'intérieur de laquelle passe le fil ou l'assemblage de fils à enrober. Les paramètres de fonctionnement de l'extrudeuse sont choisis de manière à assurer un enrobage uniforme du ou des fils qui passent à travers la filière de gainage.

Les documents US 2 105 812, US 2003/152658, JP 2001 121597 et DE 10 2011 118719 décrivent des dispositifs qui réalisent l'enrobage de fils métalliques avec des mélanges de caoutchouc ou de polymères visqueux à l'aide d'une extrudeuse et d'une tête de gainage.

Ainsi, il a été constaté que, pour un mélange de caoutchouc et un fil de renfort donnés, les paramètres à prendre en compte pour obtenir un bon enrobage du fil sont : la température du mélange, la température des parois de l'extrudeuse et de la filière de gainage, la température du fil de renfort, du diamètre et de la forme et de l'état de surface de la filière de gainage et de la pression du mélange dans la zone d'enrobage et dans la filière de gainage. Ces paramètres sont optimisés pour une vitesse nominale de circulation du fil à enrober à travers la filière de gainage.

On connaît le document US 2002/0158357 qui décrit une machine d'enrobage d'un câble très fin (ayant un diamètre de 25 µm) par un mélange de polymères d'épaisseur très fine. Afin d'obtenir un enrobage uniforme et d'épaisseur constante, on agence à la sortie de la filière d'enrobage un élément chauffant qui entoure le câble enrobé. Cet élément chauffant est piloté de manière à fournir en permanence une température préétablie en sortie de la filière d'enrobage. Des caméras vidéo surveillent le fil enrobé à la sortie de la machine et signalent à l'opérateur l'apparition d'un défaut d'enrobage. L'opérateur doit ensuite procéder à des réglages de la machine pour obtenir un enrobage uniforme. Ces réglages effectués par l'opérateur ont des conséquences négatives sur la productivité.

Le document WO 02/20898 décrit un autre exemple de dispositif de fabrication de câble composite par enrobage d'un câble en verre avec une résine protectrice dans lequel le dispositif est muni d'un élément chauffant agencé au niveau de la filière de sortie. Toutefois, selon ce document, le contrôle de l'élément chauffant est effectué par l'opérateur à l'aide des capteurs de température, en fonction du type de résine utilisée.

Le document US 3 635 621 décrit un appareil de cuisson d'un câble métallique enrobé de matériau isolant dans lequel on agence des éléments chauffants le long du trajet parcouru par le câble enrobé après sortie de la filière de gainage.

Le document JP 2006 027068 décrit quant à lui une extrudeuse qui est destinée à gainer des fils pour former une nappe, et qui comprend à cet effet une filière dont on fixe globalement la température au moyen d'un circuit de chauffage qui agit sur l'ensemble de ladite filière. En raison de son inertie, un tel agencement n'est toutefois pas adapté à la gestion de régimes de fonctionnement transitoires, tels que les phases d'arrêt ou de démarrage de l'enrobage.

Or, dans le processus de fabrication des fils de renfort enrobés par du caoutchouc, la vitesse de défilement du fil dans la filière de gainage est amenée à varier, elle étant asservie à la vitesse de défilement du fil dans un processus amont ou aval.

Il a ainsi été observé que, lorsque la vitesse de passage dans la filière varie, le fil qui la traverse n'est plus enrobé de manière uniforme. Ce phénomène est encore plus prononcé lors des phases d'arrêt ou de démarrage de l'enrobage. On obtient lors de ces phases d'arrêt et de démarrage des fils qui ne sont plus enrobés de caoutchouc et donc moins résistants. Lorsque les fils comportent des parties mal gainées ou exemptes d'enrobage, on doit découper et enlever les parties non gainées, ce qui a pour conséquence des pertes de matériaux et de productivité.

Pour remédier à ces problèmes, on s'est proposé d'agir sur les paramètres qui influencent l'enrobage du fil par un mélange d'élastomères pour les adapter à la vitesse de circulation du fil. Toutefois, on constate que, si l'on veut faire varier la température du mélange, on doit agir sur les paramètres de fonctionnement de l'extrudeuse. Mais, vu l'inertie thermique importante de l'extrudeuse et les temps assez longs de stabilisation du mélange, cette solution implique des temps de mise en oeuvre qui ne sont pas compatibles avec un système d'enrobage qui doit fonctionner en continu et être très réactif aux changements de vitesse, et ceci sans altérer les propriétés de la gomme d'enrobage.

Par ailleurs, lors des tests effectués en laboratoire, il a été constaté que la variation de la pression du mélange de gomme dans la zone de gainage n'a pas d'incidence sur l'enrobage lorsque la vitesse de déplacement du fil est presque nulle. Ce paramètre ne peut donc pas être pris en compte pour les phases d'arrêt ou de redémarrage de la machine.

L'invention a pour objet de proposer un procédé et un dispositif pour enrober un fil de renfort d'un mélange de caoutchouc aptes à apporter une solution à ces problèmes.

Cet objet est réalisé avec un procédé de fabrication de fil métallique selon la revendication 1.

Selon l'invention, on fait varier la température en sortie de la filière de gainage lorsque l'on détecte une variation de la vitesse du fil par rapport à une vitesse nominale préétablie qui correspond au fonctionnement en régime nominal de la ligne de fabrication du fil enrobé de caoutchouc. On fait appel à des moyens de chauffage rapide de l'extrémité aval de la filière de gainage afin d'obtenir une variation instantanée de la température du mélange et du fil pour l'adapter à la vitesse de passage de ce dernier dans la filière de gainage, sans devoir agir sur les paramètres de fonctionnement de l'extrudeuse. On obtient ainsi une variation rapide de la température du mélange d'élastomères qui est localisée à la sortie de la filière de gainage et ceci sans vulcaniser le mélange d'élastomères qui la traverse. Ainsi, l'énergie à transmettre et le temps de chauffe sont contrôlés par l'automatisme, ce qui permet une maitrise de l'énergie à transmettre suivant les conditions d'avance du fil. A titre d'exemple, lorsque l'ordre de chauffe est donné, on envoie en sortie de la filière une quantité d'énergie d'environ 4.5KJ pour une durée de maximum 10sec.

Le procédé de l'invention peut aussi comprendre isolément ou en combinaison le caractéristiques suivantes :
- on applique une température de consigne Tn à l'extrémité aval de la filière de gainage lorsque la vitesse mesurée de circulation du fil est égale à une vitesse nominale préétablie Vn et en ce qu'on applique au moins une température de consigne Ttrans>Tn pour une durée inférieure à celle pendant laquelle la vitesse mesurée est différente de la vitesse nominale et le fil est accéléré ;
- l'on applique une température de consigne Tn à l'extrémité aval de la filière de gainage lorsque la vitesse mesurée de circulation du fil est égale à une vitesse nominale préétablie Vn et en ce qu'on applique au moins une température de consigne Ttrans>Tn pour une durée égale à celle pendant laquelle la vitesse mesurée est différente de la vitesse nominale et le fil est ralenti ;
- la consigne de température Ttrans appliquée est supérieure à Tn et suit une loi de variation proportionnelle à la vitesse mesurée de circulation du fil ;
- la consigne de température Ttrans appliquée est supérieure à Tn et suit une loi de variation proportionnelle à la variation du diamètre du fil ;
- on applique une consigne de température Tna à l'extrémité aval de la filière de gainage lorsque le fil est à l'arrêt, cette consigne pouvant être égale à Tn ou différente de celle-ci ;

Cet objectif est également réalisé avec un dispositif selon la revendication 7.

Il a été observé lors des tests effectués en laboratoire que, le fait de surchauffer le mélange d'élastomères de manière rapide (de l'ordre de quelques secondes) dans les phases transitoires de fonctionnement rend le mélange plus fluide et de ce fait il devient apte à gainé le fil à basse vitesse. Toutefois, on doit assurer un retour rapide à la température optimale préétablie de gainage afin d'obtenir un dépôt uniforme lorsque la vitesse de circulation du fil retrouve son régime nominal de fonctionnement. Pour assurer ce passage rapide entre un apport instantané de calories et leur évacuation rapide vers l'extérieur on utilise un nez thermoconducteur rapporté sur la filière et qui comporte ses moyens de chauffage propres, qui sont commandés indépendamment des autres moyens de chauffage du dispositif, et qui est réalisé de manière à présenter une faible inertie thermique. On obtient ainsi, un fil gainé sur toute sa longueur, pour toute valeur de vitesse et toute phase de fonctionnement du dispositif, ce qui permet d'obtenir un gain net de productivité, tout en évitant les zones non gainées.

Le dispositif de l'invention peut aussi comprendre isolément ou en combinaison le caractéristiques suivantes :
- le nez thermoconducteur entoure l'extrémité avant de la filière de gainage et est réalisé de manière à ce que, lorsqu'ils sont alimentés, ses éléments chauffants arrivent à augmenter la température dudit nez de 30 à 50°C en un temps égal ou inférieur à 10 sec ; ainsi, le nez thermoconducteur de l'invention arrive à élever localement et rapidement la température sans influer sur celle de la tête de gainage ou de l'extrudeuse ;
- le nez thermoconducteur comporte ou coopère avec des moyens de refroidissement de manière à retrouver rapidement un fonctionnement régulier en dehors des périodes de régime transitoire ;
- le nez thermoconducteur est monté amovible ou interchangeable sur l'extrémité aval de la filière de gainage afin de pouvoir l'adapter à celle-ci;
- le dispositif comporte un capteur de mesure du diamètre du fil gainé et la température du nez thermoconducteur est ajustée en fonction du diamètre du fil gainé, pour améliorer encore plus la qualité du gainage ;
- la partie aval de la filière de gainage est isolée thermiquement du reste de la filière, ce qui permet de cibler de manière plus précise l'apport des calories ;
- le nez thermoconducteur est escamotable automatiquement, ce qui permet, en cas de besoin, d'évacuer les calories plus rapidement en écartant le nez du reste de la filière;
- le nez thermoconducteur est réalisé en un matériau à forte diffusivité thermique, de préférence en aluminium ; on préfère un matériau ayant une forte diffusivité thermique (tels le cuivre ou l'aluminium) et donc une bonne aptitude à transmettre la chaleur car le nez thermoconducteur de l'invention doit présenter une faible inertie thermique afin qu'il puisse être très réactif aux changements de vitesse du fil à gainer ; on préfère ainsi un nez ayant une faible masse volumique et une forte conductivité thermique ;
- le nez thermoconducteur est une bobine d'induction et l'extrémité aval de la filière de gainage est en un matériau ferromagnétique ; dans ce cas, lorsqu'il est alimenté le nez permet de chauffer directement par induction l'extrémité aval de la filière de gainage.

Selon l'invention, on comprend par fil un élément filaire de renfort qui peut être constitué d'un fil unitaire ou d'un assemblage de fils unitaires formant un toron unitaire ou câble ou d'un assemblage de câbles, appelé câble multi torons. Par toron unitaire on comprend généralement un câble dit à couches constitué d'une couche centrale ou noyau et d'une ou plusieurs couches extérieures concentriques disposées autour du noyau. Les câbles à trois couches le plus utilisés sont des câbles de construction M+N+P formés d'un noyau de M fils, M variant de 1 à 4, d'une couche intermédiaire N, N variant de de 3 à 12 entourée d'une couche externe de P fils, P variant de 8 à 20.

La description qui suit s'appuie sur les figures 1 à 3 dans lesquelles :
- la figure 1 illustre un dispositif d'assemblage et de gommage de fils à l'aide de l'extrudeuse de l'invention ;
- la figure 2 est un schéma fonctionnel du dispositif d'assemblage et de gommage de fils de la figure 1 ;
- la figure 3 est un diagramme illustrant la variation de la vitesse de déplacement du fil à gommer et de la température à proximité de la sortie de l'extrudeuse de l'invention en fonction du temps.

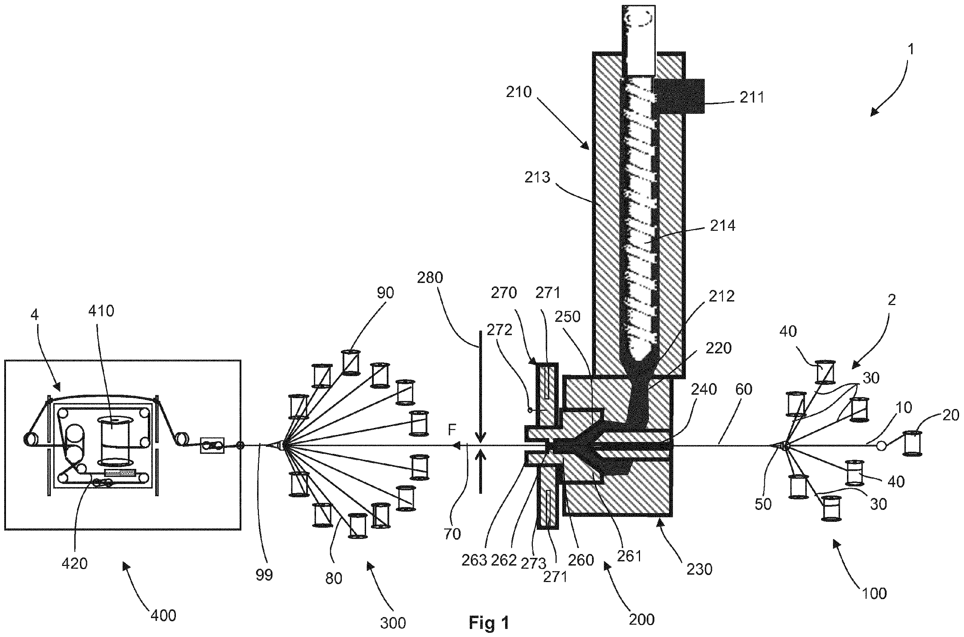

La figure 1 illustre un dispositif 1 d'assemblage et de gommage de fils comportant une extrudeuse et une filière de gainage selon l'invention. Dans ce dispositif, un fil noyau unique 10 délivré par une bobine d'alimentation 20 est assemblé avec six autres fils 30 délivrés par des bobines d'alimentation 40 pour former, en un point d'assemblage 50 d'une première zone de déroulage 100, un assemblage par retordage ou toron d'âme appelé dans ce qui suit le fil 60. Le fil 60 est gainé en traversant une zone de gainage 200 et progresse au sens de la flèche F. Le fil gainé 70 arrive dans une zone d'assemblage 300 dans laquelle il est assemblé par retordage avec d'autres fils 80 de la couche externe de l'assemblage, en nombre de douze dans l'exemple illustré, délivrés par des bobines d'alimentation 90. Le câble final 99 ainsi obtenu est finalement collecté dans une zone d'enroulage 400 sur la réception tournante 410, après traversée des moyens d'équilibrage de torsion 420 consistant par exemple en un dresseur ou un retordeur dresseur. Un tel dispositif de fabrication de câbles à plusieurs couches est mieux décrit dans le document WO 2010/112445 au nom des demanderesses.

La zone de gainage 200 comprend une extrudeuse 210 comportant un fourreau 213 muni d'une entrée d'alimentation en mélange d'élastomères et d'une sortie 212 du mélange homogénéisé délivré à une pression, une température et un débit donnés par une vis 214. La sortie 212 débouche dans un canal d'alimentation 220 d'une tête de gainage 230. La tête de gainage 230 comprend un guide fil 240 situé à l'entrée de la tête de gainage, tel que vu dans le sens de circulation du fil 60, qui se prolonge par une chambre d'enduction 250 dans laquelle débouche le canal d'alimentation 220. La direction d'écoulement du mélange d'élastomères est perpendiculaire à la direction de circulation du fil 60. Le gainage du fil se fait dans une filière de gainage 260 comportant une extrémité amont formant un convergent 261 autour de la chambre d'enduction 250 et une extrémité aval 262 de calibrage dont la sortie présente un diamètre interne calibré qui définit le diamètre du fil gainé. La filière de gainage est réalisée en acier, les parties amont 261 et aval 261 pouvant être réalisées en une pièce, comme illustré, ou en plusieurs pièces. De manière connue, la tête de gainage 260 comporte des éléments chauffants propres reliés à une sonde de température (non représentés sur les dessins) et à des moyens de régulation thermique de ces éléments chauffants.

Selon l'invention, on adjoint à l'extrémité aval 262 de la filière de gainage un nez thermoconducteur 270. Le nez thermoconducteur 270 est agencé de manière à être en contact thermique avec la filière de gainage 260, par exemple en étant monté directement sur l'extrémité aval 262 de celle-ci. Dans une variante, le nez thermoconducteur 270 contient la filière de gainage.

Dans l'exemple illustré, le nez thermoconducteur 270 est monté de manière amovible ou interchangeable à l'extrémité aval de la filière de gainage 262. Il est ainsi réalisé sous la forme d'un collier cylindrique fendu radialement et qui vient se fixer moyennant une vis de fixation sur le diamètre extérieur de la partie saillante 263 de la filière de gainage 260.

Pour les besoins de l'invention, le nez thermoconducteur 270 doit avoir une faible masse et une faible inertie thermique afin de réagir rapidement aux besoins de régulation en température du dispositif, tel qu'il sera expliqué par la suite. Ainsi, le nez thermoconducteur 270 est de préférence réalisé en aluminium ou d'un autre matériau à forte diffusivité, il a une masse d'environ 200g pour un diamètre externe de 72mm, un diamètre interne de 20 mm et une épaisseur de 17,5mm. Le nez est en contact direct avec l'extrémité aval 262 formant la partie de calibrage de la filière de gainage 260 ou, lorsqu'il y a une paroi thermiquement conductrice entre les deux, l'épaisseur de celle-ci ne doit pas dépasser 10mm. Pour les besoins de l'invention également, on munit le nez thermoconducteur 270 d'un ou plusieurs éléments chauffants 271, du type résistances blindées ou colliers chauffants, aptes à fournir une puissance de chauffe importante. Dans l'exemple illustré, le nez comprend trois résistances blindées ayant chacune une puissance de 150 W. Une sonde de température 272 est noyée dans le nez thermoconducteur 270 et est reliée à des moyens de régulation thermique pour commander l'alimentation des éléments chauffants 271, tel qu'il sera expliqué par la suite.

Pour les besoins de l'invention également, le nez thermoconducteur 270 doit pouvoir évacuer rapidement les calories, en fonction de la commande reçue des moyens de régulation thermique. Pour ceci, le nez doit avoir une surface frontale 273 importante pour une faible épaisseur afin de pouvoir se refroidir rapidement par convection naturelle, par exemple un rapport entre la largeur de la zone annulaire frontale et son épaisseur supérieur à 2. Dans l'exemple illustré, le temps de refroidissement du nez est d'environ 3 à 6 min. Pour accélérer son refroidissement par convection naturelle, on munit la surface frontale 273 du nez d'ailettes de refroidissement. Dans une variante, le nez peut être refroidi à l'aide d'un système de refroidissement à convection forcée, par exemple un ventilateur agencé à proximité, ou en faisant circuler un fluide de refroidissement dans des canaux qui traversent le nez chauffant ou qui sont en contact thermique avec la périphérie de celui-ci.

Dans une variante (non illustrée) le nez thermoconducteur est escamotable automatiquement de manière à lui permettre un meilleur refroidissement.

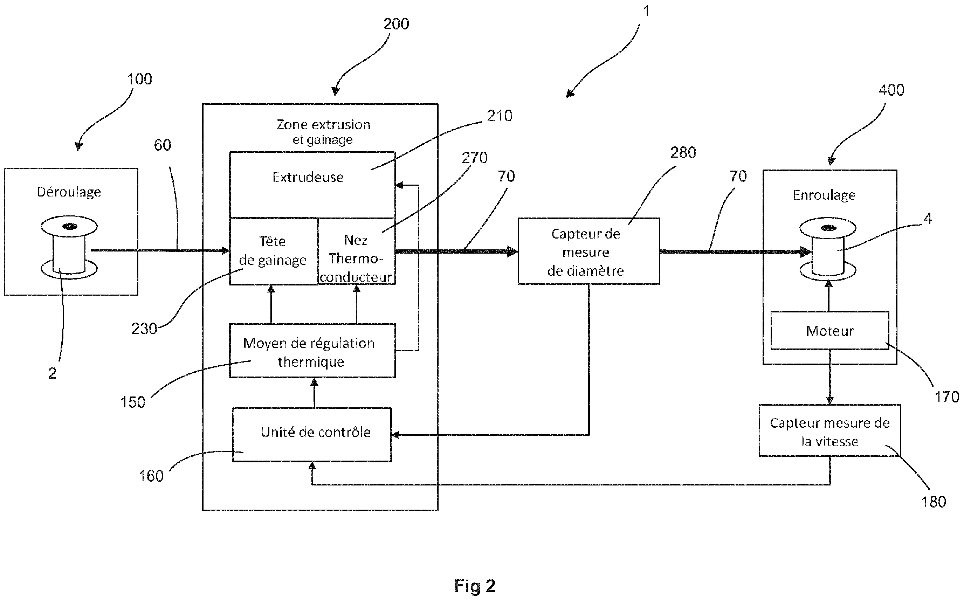

A la sortie de la filière de gainage, on agence un capteur de mesure 280 du diamètre du fil gainé 70, par exemple un capteur laser, qui transmet les informations aux moyens de régulation thermique 150 (fig. 2) du dispositif 1.

La figure 2 illustre le schéma fonctionnel du dispositif 1 de l'invention. Le fil circule à une vitesse donnée ou vitesse nominale Vn à travers la tête de gainage 230 de la zone de gainage 200 et est mis en tension entre des moyens de déroulage représentés par une bobine de déroulage 2 dans la zone de déroulage 100 et des moyens d'enroulage représentés par une bobine 4 dans la zone d'enroulage 400. La bobine d'enroulage 4 est mise en rotation par un moteur électrique 170 dont la vitesse de rotation est mesurée par un capteur de vitesse 180. Les valeurs mesurées de la vitesse d'enroulage sont transmises à un automatisme ou unité de contrôle 160 qui commande les moyens de régulation thermique 150 de la zone de gainage 200 qui pilotent les paramètres de fonctionnement de l'extrudeuse 210 (notamment la vitesse de rotation de la vis 214, la régulation des éléments chauffants du fourreau 213), la régulation des éléments chauffants de la tête d'extrusion 230 et celle des éléments chauffants du nez thermoconducteur 270. Dans la mémoire de l'unité de contrôle 160 sont stockées des recettes qui attribuent des valeurs de consigne aux différents paramètres de fonctionnement des composants de la zone de gainage 200 en fonction du mélange d'élastomère utilisé et de l'épaisseur d'enrobage souhaitée. Ces recettes sont établies pour une valeur nominale de la vitesse de passage du fil dans le dispositif 1 de l'invention qui correspond à la vitesse optimale de fonctionnement de la ligne d'assemblage. Lorsqu'apparaissent des variations de la vitesse de la ligne d'assemblage, ces variations sont détectées par le capteur de vitesse 180 et transmises à l'unité de contrôle 160 qui agit sur les valeurs de consigne de la température du nez thermoconducteur 270.

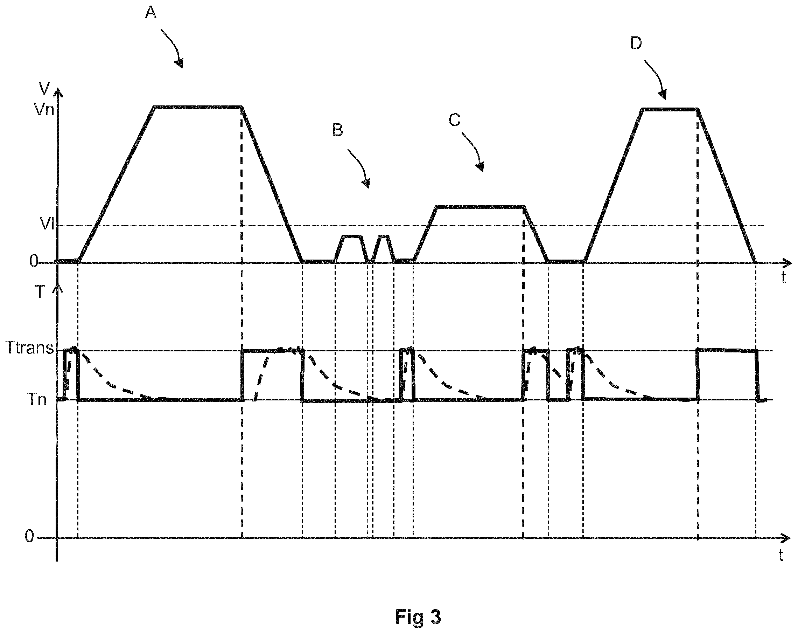

Le diagramme de la figure 3 illustre la variation de la vitesse de la ligne V en fonction du temps t, correspondant aux différentes phases de fonctionnement de la ligne d'assemblage et, en parallèle en dessous, les variations correspondantes de la température T du nez thermoconducteur 270 commandée par l'unité de contrôle 160. Ainsi, on note que, lorsque la ligne d'assemblage tourne en régime établi à la vitesse nominale, le nez thermoconducteur 270 est régulé en température sur une consigne de température nominale Tn. La variation de la température de consigne du nez (dont les valeurs sont commandées par l'unité de contrôle 160) est représentée par un trait continu et la variation de sa température réelle (due à l'inertie thermique des différents composants de la tête de gainage) par des traits interrompus sur ce diagramme.

En référence à la figure 3, un fonctionnement de la ligne dans la zone A correspond à une phase de démarrage suivie d'une phase de fonctionnement à la vitesse nominale Vn de la ligne, puis d'une phase de décélération et d'arrêt de la ligne. Le diagramme illustrant la variation de la température situé en dessous montre que, dès l'ordre de démarrage de la ligne donné par l'unité de contrôle 160, on impose une température de consigne du nez thermoconducteur 270 à une valeur de transition Ttrans supérieure à la valeur de consigne nominale Tn que les moyens de régulations tentent d'atteindre rapidement et ceci pour une durée très courte, inférieure ou égale à 10 sec. Une fois que la température du nez ait atteint la température de consigne Ttrans, la ligne est autorisée à démarrer. Dès le démarrage effectué, la température de consigne imposée au nez est à nouveau Tn, car la température réelle du nez est supérieure à la température nominale même pour une vitesse de la ligne inférieure à la vitesse limite de gainage VI (la vitesse pour laquelle, à la température de consigne Tn on n'obtient pas de gommage régulier du fil). Dès l'ordre de décélération donné par l'unité de contrôle 160 de la ligne d'assemblage, on impose à nouveau un chauffage à pleine puissance du nez en lui imposant une consigne haute de température Ttrans, et ceci jusqu'à l'arrêt de la ligne. Après l'arrêt de la ligne, la consigne de température du nez est ramenée à Tn, de manière à être prêt à recevoir un nouvel ordre. La phase B correspond à une opération d'enfilage (réalisation des noeuds par assemblage de fils bout à bout), la phase C à une opération de passage de noeud, à une vitesse inférieure à celle nominale de la ligne et la phase D à un fonctionnement identique à celui de la phase A, mais pour une durée plus courte. D'autres combinaisons d'étapes de fonctionnement peuvent être envisagées, la régulation de la température du nez thermoconducteur 270 sera faite en conséquence.

A titre d'exemple, les phases d'accélération et de décélération ont une durée de l'ordre de 5 à 40 sec. A titre d'exemple également, la vitesse Vn est d'environ 80m/min et les moyens de régulation thermique alimentent les éléments chauffants dès réception d'un ordre de début ou de fin de cycle.

De préférence, la valeur de consigne Ttrans est supérieure de 30 à 50°C à la valeur de la température Tn.

Dans un autre mode de réalisation de l'invention, la régulation du nez thermoconducteur peut se faire selon plusieurs valeurs de consigne de la température de transition Ttrans1 jusqu'à Ttransi, au-déla de celle nominale Tn.

Dans une variante, les valeurs de la température de consigne du nez thermoconducteur sont choisies de manière à être proportionnelles à la vitesse v de la ligne d'assemblage.

Dans encore une autre variante, les valeurs de la température de consigne du nez thermoconducteur lors du fonctionnement à un régime nominal préétabli de la ligne d'assemblage sont choisies de manière à être proportionnelles aux valeurs du diamètre du fil gainé 70 mesurées par le capteur 280. Ainsi, on peut utiliser la régulation du nez thermoconducteur pour piloter l'épaisseur de la gomme de gainage.

Dans une autre variante, la valeur de consigne de la température à l'arrêt de la ligne peut être choisie à une valeur différente de la température nominale de fonctionnement Tn.

Dans une variante de réalisation de l'invention, le nez thermoconducteur est remplacé par une bobine d'induction qui entoure la partie formant l'extrémité aval 262 de la filière (ou pièce comportant la partie de calibrage de la filière de gainage lorsque celle-ci est réalisée par assemblage de plusieurs pièces), cette partie étant réalisée en un matériau ferromagnétique. L'alimentation de la bobine d'induction est commandée par l'unité de contrôle 160 de manière à obtenir les mêmes températures de consigne au niveau du calibrage de la filière de gainage.

Dans encore une autre variante, la partie de calibrage de la filière de gainage est supportée par une pièce qui est isolée thermiquement du reste de la tête de gainage 230 de manière à pouvoir piloter de manière plus précise le chauffage du nez thermoconducteur avec lequel elle est en contact thermique.

Par ailleurs, la zone de gommage 200 peut être présente à plusieurs endroits sur le parcours du fil, dès qu'un gommage de celui-ci est nécessaire. Ainsi une zone de gommage 200 peut être agencée sur le parcours du fil 10, après la sortie de la bobine 20 et avant son assemblage avec les fils 30, cette zone pouvant être présente en plus ou à la place de la zone de gainage 200 de l'assemblage formant le fil 60. De la même manière, le dispositif et procédé de l'invention peuvent s'appliquer au gommage d'un fil unitaire qu'au gommage d'un toron unitaire ou d'un câble multi torons.

## Revendications

1. Procédé de fabrication de fil métallique par gainage d'un fil (60) par un mélange d'élastomères en provenance d'une extrudeuse (210) comportant un canal d'alimentation (220) d'une filière de gainage (260) à travers laquelle est amené à circuler ledit fil à une vitesse nominale préétablie Vn, **caractérisé en ce qu'**on varie la température de l'extrémité aval (262) de la filière de gainage (260) pour une durée prédéterminée et indépendamment du reste de celle-ci lorsque que la vitesse mesurée de circulation Vm du fil est différente de Vn.

2. Procédé selon la revendication 1, **caractérisé en ce que** l'on applique une température de consigne Tn à l'extrémité aval (262) de la filière de gainage (260) lorsque la vitesse mesurée de circulation du fil (60) est égale à une vitesse nominale préétablie Vn et **en ce qu'**on applique au moins une température de consigne Ttrans>Tn pour une durée inférieure à celle pendant laquelle la vitesse mesurée est différente de la vitesse nominale et le fil est accéléré.

3. Procédé selon l'une des revendication 1 ou 2, **caractérisé en ce que** l'on applique une température de consigne Tn à l'extrémité aval (262) de la filière de gainage (260) lorsque la vitesse mesurée de circulation du fil (60) est égale à une vitesse nominale préétablie Vn et **en ce qu'**on applique au moins une température de consigne Ttrans>Tn pour une durée égale à celle pendant laquelle la vitesse mesurée est différente de la vitesse nominale et le fil est ralenti.

4. Procédé selon l'une des revendications 2 ou 3, **caractérisé en ce que** la consigne de température Ttrans appliquée est supérieure à Tn et suit une loi de variation proportionnelle à la vitesse mesurée de circulation du fil.

5. Procédé selon l'une des revendications 2 ou 3, **caractérisé en ce que** la consigne de température Ttrans appliquée est supérieure à Tn et suit une loi de variation proportionnelle à la variation du diamètre du fil (60).

6. Procédé selon l'une des revendications 2 à 5, **caractérisé en ce qu'**on applique une consigne de température Tna à l'extrémité aval (262) de la filière de gainage (260) lorsque le fil est à l'arrêt.

7. Dispositif de de fabrication de fil métallique par gainage d'un fil (60) par un mélange d'élastomères en provenance d'une extrudeuse (210) comportant un canal d'alimentation (220) d'une filière de gainage (260) à travers laquelle est amené à circuler ledit fil à une vitesse nominale préétablie Vn entre une bobine de déroulage (2) et une bobine d'enroulage (4), **caractérisé en ce qu'**il comprend un nez thermoconducteur (270) en contact thermique avec l'extrémité aval (262) de la filière de gainage (260), ledit nez comportant des moyens de chauffage (271) commandés par des moyens de régulation thermique (150) reliés à des moyens de mesure de la vitesse de circulation du fil de manière à réguler lesdits moyens de chauffage (271) du nez lorsque la vitesse mesurée Vm de circulation du fil (60) est différente de la vitesse nominale Vn.

8. Dispositif selon la revendication 7, **caractérisé en ce que** le nez thermoconducteur (270) entoure l'extrémité avant de la filière de gainage et est réalisé de manière à ce que, lorsqu'ils sont alimentés, ses moyens de chauffage (271) arrivent à augmenter la température dudit nez de 30 à 50°C en un temps inférieur ou égal à 10 sec.

9. Dispositif selon la revendication 7 ou la revendication 8, **caractérisé en ce que** le nez thermoconducteur (270) comporte, ou coopère avec, des moyens de refroidissement.

10. Dispositif selon l'une des revendications 7 à 9, **caractérisé en ce que** le nez thermoconducteur (270) est amovible.

11. Dispositif selon l'une des revendications 7 à 10, **caractérisé en ce qu'**il comporte un capteur de mesure du diamètre (280) du fil gainé (70) et **en ce que** la température du nez thermoconducteur (270) est ajustée en fonction du diamètre du fil gainé (70).

12. Dispositif selon l'une des revendications 7 à 11, **caractérisé en ce que** la partie aval (262) de la filière de gainage (260) est isolée thermiquement du reste de la filière.

13. Dispositif selon l'une des revendications 7 à 12, **caractérisé en ce que** le nez thermoconducteur (270) est escamotable automatiquement.

14. Dispositif selon l'une des revendications 7 à 13, **caractérisé en ce que** le nez thermoconducteur (270) est en un matériau à forte diffusivité thermique, de préférence en aluminium.

15. Dispositif selon l'une des revendications 7 à 13, **caractérisé en ce que** le nez thermoconducteur est une bobine d'induction et **en ce que** l'extrémité aval (262) de la filière de gainage est réalisée en un matériau ferromagnétique.

## Patentansprüche

1. Verfahren zur Herstellung von Metalldraht durch Umhüllen eines Drahtes (60) mit einer Elastomermischung, die von einem Extruder (210) kommt, der einen Zufuhrkanal (220) einer Umhüllungs-Extrusionsdüse (260) aufweist, durch welche der Draht mit einer im Voraus festgelegten Nenngeschwindigkeit Vn hindurchlaufen gelassen wird, **dadurch gekennzeichnet, dass** die Temperatur des nachgelagerten Endes (262) der Umhüllungs-Extrusionsdüse (260) für eine vorbestimmte Dauer und unabhängig vom Rest derselben variiert wird, wenn die gemessene Durchlaufgeschwindigkeit Vm des Drahtes von Vn verschieden ist.

2. Verfahren nach Anspruch 1, **dadurch gekennzeichnet, dass** eine Solltemperatur Tn am nachgelagerten Ende (262) der Umhüllungs-Extrusionsdüse (260) angewendet wird, wenn die gemessene Durchlaufgeschwindigkeit des Drahtes (60) gleich einer im Voraus festgelegten Nenngeschwindigkeit Vn ist, und dadurch, dass wenigstens eine Solltemperatur Ttrans > Tn für eine Dauer angewendet wird, die kürzer als diejenige ist, während der die gemessene Geschwindigkeit von der Nenngeschwindigkeit verschieden ist und der Draht beschleunigt wird.

3. Verfahren nach einem der Ansprüche 1 oder 2, **dadurch gekennzeichnet, dass** eine Solltemperatur Tn am nachgelagerten Ende (262) der Umhüllungs-Extrusionsdüse (260) angewendet wird, wenn die gemessene Durchlaufgeschwindigkeit des Drahtes (60) gleich einer im Voraus festgelegten Nenngeschwindigkeit Vn ist, und dadurch, dass wenigstens eine Solltemperatur Ttrans > Tn für eine Dauer angewendet wird, die gleich derjenigen ist, während der die gemessene Geschwindigkeit von der Nenngeschwindigkeit verschieden ist und der Draht verlangsamt wird.

4. Verfahren nach einem der Ansprüche 2 oder 3, **dadurch gekennzeichnet, dass** der angewendete Temperatursollwert Ttrans größer als Tn ist und einem Änderungsgesetz folgt, das proportional zur gemessenen Durchlaufgeschwindigkeit des Drahtes ist.

5. Verfahren nach einem der Ansprüche 2 oder 3, **dadurch gekennzeichnet, dass** der angewendete Temperatursollwert Ttrans größer als Tn ist und einem Änderungsgesetz folgt, das proportional zur Änderung des Durchmessers des Drahtes (60) ist.

6. Verfahren nach einem der Ansprüche 2 bis 5, **dadurch gekennzeichnet, dass** ein Temperatursollwert Tna nachgelagerten Ende (262) der Umhüllungs-Extrusionsdüse (260) angewendet wird, wenn der Draht stillsteht.

7. Vorrichtung zur Herstellung von Metalldraht durch Umhüllen eines Drahtes (60) mit einer Elastomermischung, die von einem Extruder (210) kommt, der einen Zufuhrkanal (220) einer Umhüllungs-Extrusionsdüse (260) aufweist, durch welche der Draht mit einer im Voraus festgelegten Nenngeschwindigkeit Vn zwischen einer Abwickelrolle (2) und einer Aufwickelrolle (4) hindurchlaufen gelassen wird, **dadurch gekennzeichnet, dass** sie ein wärmeleitendes Vorderteil (270) umfasst, das sich in thermischem Kontakt mit dem nachgelagerten Ende (262) der Umhüllungs-Extrusionsdüse (260) befindet, wobei das Vorderteil Heizmittel (271) aufweist, die von Mitteln zur thermischen Regelung (150) gesteuert werden, die mit Mitteln zur Messung der Durchlaufgeschwindigkeit des Drahtes verbunden sind, um die Heizmittel (271) des Vorderteils zu regeln, wenn die gemessene Durchlaufgeschwindigkeit Vm des Drahtes (60) von der Nenngeschwindigkeit Vn verschieden ist.

8. Vorrichtung nach Anspruch 7, **dadurch gekennzeichnet, dass** das wärmeleitende Vorderteil (270) das vordere Ende der Umhüllungs-Extrusionsdüse umgibt und derart ausgelegt ist, dass seine Heizmittel (271), wenn sie mit Strom versorgt werden, in der Lage sind, die Temperatur des Vorderteils in einer Zeit, die kürzer als oder gleich 10 s ist, um 30 bis 50 °C zu erhöhen.

9. Vorrichtung nach Anspruch 7 oder Anspruch 8, **dadurch gekennzeichnet, dass** das wärmeleitende Vorderteil (270) Kühlmittel aufweist oder mit solchen zusammenwirkt.

10. Vorrichtung nach einem der Ansprüche 7 bis 9, **dadurch gekennzeichnet, dass** das wärmeleitende Vorderteil (270) lösbar ist.

11. Vorrichtung nach einem der Ansprüche 7 bis 10, **dadurch gekennzeichnet, dass** sie einen Sensor zur Messung des Durchmessers (280) des umhüllten Drahtes (70) aufweist, und dadurch, dass die Temperatur des wärmeleitenden Vorderteils (270) in Abhängigkeit vom Durchmesser des umhüllten Drahtes (70) angepasst wird.

12. Vorrichtung nach einem der Ansprüche 7 bis 11, **dadurch gekennzeichnet, dass** der nachgelagerte Teil (262) der Umhüllungs-Extrusionsdüse (260) vom Rest der Extrusionsdüse thermisch isoliert ist.

13. Vorrichtung nach einem der Ansprüche 7 bis 12, **dadurch gekennzeichnet, dass** das wärmeleitende Vorderteil (270) automatisch einziehbar ist.

14. Vorrichtung nach einem der Ansprüche 7 bis 13, **dadurch gekennzeichnet, dass** das wärmeleitende Vorderteil (270) aus einem Material mit hoher Wärmediffusivität besteht, vorzugsweise aus Aluminium.

15. Vorrichtung nach einem der Ansprüche 7 bis 13, **dadurch gekennzeichnet, dass** das wärmeleitende Vorderteil eine Induktionsspule ist, und dadurch, dass das nachgelagerte Ende (262) der Umhüllungs-Extrusionsdüse aus einem ferromagnetischen Material hergestellt ist.

## Claims

1. Method for producing metal wire by sheathing a wire (60) with an elastomer compound coming from an extruder (210) comprising a feed canal (220) feeding a sheathing die (260) through which the said wire is made to pass at a pre-established nominal speed Vn, **characterized in that** the temperature of the downstream end (262) of the sheathing die (260) is varied for a predetermined duration and independently of the rest of this die when the measured speed Vm at which the wire is moving is other than Vn.

2. Method according to Claim 1, **characterized in that** a setpoint temperature Tn is applied to the downstream end (262) of the sheathing die (260) when the measured speed at which the wire (60) is travelling is equal to a pre-established nominal speed Vn and **in that** at least one setpoint temperature Ttrans>Tn is applied for a duration shorter than the duration for which the measured speed is different from the nominal speed and the wire is accelerated.

3. Method according to one of Claims 1 and 2, **characterized in that** a setpoint temperature Tn is applied to the downstream end (262) of the sheathing die (260) when the measured speed at which the wire (60) is travelling is equal to a pre-established nominal speed Vn and **in that** at least one setpoint temperature Ttrans>Tn is applied for a duration equal to the duration for which the measured speed is different from the nominal speed and the wire is slowed.

4. Method according to one of Claims 2 and 3, **characterized in that** the temperature setpoint Ttrans applied is greater than Tn and follows a variation law proportional to the measured speed at which the wire is travelling.

5. Method according to one of Claims 2 and 3, **characterized in that** the temperature setpoint Ttrans applied is greater than Tn and follows a variation law proportional to the variation in the diameter of the wire (60).

6. Method according to one of Claims 2 to 5, **characterized in that** a temperature setpoint Tna is applied to the downstream end (262) of the sheathing die (260) when the wire is stationary.

7. Device for producing metal wire by sheathing a wire (60) with an elastomer compound coming from an extruder (210) comprising a feed canal (220) feeding a sheathing die (260) through which the said wire is made to pass at a pre-established nominal speed Vn, between an unwinding spool (2) and a winding spool (4), **characterized in that** it comprises a thermally conducting tip (270) in thermal contact with the downstream end (262) of the sheathing die (260), the said tip comprising heating means (271) controlled by thermal regulation means (150) connected to means for measuring the speed at which the wire is travelling so as to regulate the said tip heating means (271) when the measured speed Vm at which the wire (60) is travelling is different from the nominal speed Vn.

8. Device according to Claim 7, **characterized in that** the thermally conducting tip (270) surrounds the front end of the sheathing die and is made in such a way that when powered, its heating means (271) succeed in increasing the temperature of the said tip by 30 to 50°C in a time less than or equal to 10 sec.

9. Device according to Claim 7 or Claim 8, **characterized in that** the thermally conducting tip (270) comprises, or collaborates with, cooling means.

10. Device according to one of Claims 7 to 9, **characterized in that** the thermally conducting tip (270) is removable.

11. Device according to one of Claims 7 to 10, **characterized in that** it comprises a sensor (280) for measuring the diameter of the sheathed wire (70) and **in that** the temperature of the thermally conducting tip (270) is adjusted according to the diameter of the sheathed wire (70).

12. Device according to one of Claims 7 to 11, **characterized in that** the downstream part (262) of the sheathing die (260) is thermally insulated from the rest of the die.

13. Device according to one of Claims 7 to 12, **characterized in that** the thermally conducting tip (270) is automatically retractable.

14. Device according to one of Claims 7 to 13, **characterized in that** the thermally conducting tip (270) is made of a material with high thermal diffusivity, preferably from aluminium.

15. Device according to one of Claims 7 to 13, **characterized in that** the thermally conducting tip is an induction coil and **in that** the downstream end (262) of the sheathing die is made from a ferromagnetic material.
